# EUROPEAN PATENT APPLICATION

(11) **EP 2 147 596 A1**
(43) Date of publication of application: **27.01.2010**
(21) Application number: 09251380.3
(22) Date of filing: 22.05.2009
(51) Int. Cl.: A01K 97/12

(54) **A fish-bite indicating device**

(30) Priority: 21.07.2008 GB 0813327; 22.01.2009 GB 0901081
(71) Applicant: Fox International Group Limited, Hainault, Essex IG6 3UT (GB)
(72) Inventor: Simpson, Nigel, Isle of Wight CO38 3BZ (GB)
(74) Representative: Crouch, David John

(57) **Abstract**

A fish-bite indicating device (10) having a fishing line movement sensor (114,212) and an indicator signal generating circuit (62,224) connected to the sensor (114,212) to provide an indicator signal upon detection of line movement by the sensor (114,212). The indicator signal generating circuit (62,224) is provided with an output (66,126) which communicates with a further bite indicating device (70,158). The device (10) is provided with illumination means (22) capable of adopting any selected one of a plurality of different colours with which it is illuminated in dependence upon a signal issued by the indicator signal generating circuit (62,224). That signal is also delivered to the said output (66,126), so that when such a further bite indicating device (70,158), also with illumination means (76,128) capable of adopting any selected one of a plurality of different colours with which it is illuminated, is in communication with the first-mentioned bite indicating device (10), the illumination means (76,128) of the further bite indicating device (70,158) are illuminated with the same selected colour as the illumination means (22) of the first-mentioned bite indicating device (10), said colour being determined also by the said signal.

## Description

The present invention relates to a fish-bite indicating device having a fishing line movement sensor and an indicator signal generating circuit connected to the sensor to provide an indicator signal upon detection of line movement by the sensor, the indicator signal generating circuit being provided with an output which communicates with a further bite indicating device when the first-mentioned bite indicating device is in use.

As a result, the timing of the illumination of illumination means of the further bite indicating device can be determined by the indicator signal generating circuit of the apparatus. This avoids the need for an additional such circuit for the illumination means of the further bite indicating device.

Such apparatus is disclosed in GB-A-2,274,761.

A disadvantage of such a device is that the colour of the illumination means is unalterable, so that a number of different sets of apparatus are required to give potential purchasers a colour option, increasing the cost of stock required.

The present invention seeks to provide a remedy.

Accordingly, the present invention is directed to a bite indicating device having the construction set out in the opening paragraph of the present specification, in which the device is provided with illumination means connected to the indicator signal generating circuit and capable of adopting any selected one of a plurality of different colours with which it is illuminated in dependence upon a signal issued by the indicator signal generating circuit, and in which that signal is also delivered to the said output, so that when such a further bite indicating device, also with illumination means capable of adopting any selected one of a plurality of different colours with which it is illuminated, is in communication with the first-mentioned bite indicating device, the illumination means of the further bite indicating device are illuminated with the same selected one of the said plurality of different colours as the illumination means of the first-mentioned bite indicating device, the colour of the illumination means of the further bite indicating device being determined also by the said signal.

The said output may comprise an output connector. Such a connector may be in addition to a further output connector with which the device may be provided, this further output connector being so constructed as to enable a readily releasable electrical connection to be made with a power source of the apparatus, for example a nine volt battery.

More preferably, however, the first-mentioned output connection is constructed to provide such a power source connection, avoiding the need for such a further output connector.

The indicator signal generating circuit may issue a first signal when the line movement is in one direction, and a second signal, different from the first signal, when it is in the opposite direction. The first signal may be continuous, and the second pulsed.

Means for distinguishing between forward and rearward longitudinal movement of a line are disclosed in EP-A-0850562.

In a further embodiment of the present invention, the said output comprises a digital transmitter capable of transmitting a digitally encoded signal, and the said first bite indicating device has a receiver capable of receiving and decoding the digitally encoded signal from the transmitter. The first-mentioned fish-bite indicating device may be provided with a colour selector switch connected to its illumination means and electrical circuitry connected between the colour selector switch and the transmitter so that the latter issues a colour signal in dependence upon the colour selected by the colour selector switch.

The present invention extends to apparatus comprising both the first mentioned fish-bite indicating device and the said further fish-bite indicating device. The said further fish-bite indicating device may be provided with illumination means and electrical circuitry connected between the receiver and its illumination means to change the colour of the light emitted therefrom to the colour, if changed, emitted by the illumination means of the device which has the transmitter upon receipt of the said colour signal.

Preferably, the first-mentioned fish-bite indicating device is constructed to issue a digital alarm signal from its transmitter when it detects a fish bite, and the colour signal is incorporated into such an alarm signal.

Preferably, the colour selector switch comprises a dipswitch. The colour selector switch may be located on the first-mentioned fish-bite indicating device. It may be so located on that device so that it is only accessible upon removal of a battery cover thereof.

To improve the reliability of the apparatus, the digitally encoded signal may comprise a radio signal.

The invention extends to such a further bite indicating device per se. The latter may comprise a receiver capable of receiving and decoding the digitally encoded signal from the transmitter, and may be provided with illumination means and electrical circuitry connected between the receiver and its illumination means to change the colour of the light emitted therefrom to the colour, if changed, emitted by the illumination means of the device which has the transmitter upon receipt of the said colour signal. Alternatively the further bite indicating device may comprise a line releasably-engaging head with illumination means capable of emitting light of any selected one of a plurality of different colours, and an electrical connector connectable to the output of the first-mentioned device in accordance with the invention and connected to the illumination means of the head to ensure that the colour of light emitted thereby is the same as that emitted by the first-mentioned illumination means.

The further bite indicating device may comprise a pivotal arm mounted on a pivot at one end and provided with such a line releasably-engaging head at the other.

The present invention extends to a unit provided with a transmitter/receiver capable of receiving and transmitting digitally encoded signals, illumination means capable of adopting any selected one of a plurality of different colours with which it is illuminated, and electrical circuitry connected between the transmitter/receiver and the illumination means to cause light to be emitted therefrom in dependence upon a signal transmitted by a fish-bite detector when the unit is in use, the unit having a colour selector switch connected to its illumination means and electrical circuitry connected between the colour selector switch and the transmitter/receiver so that the latter issues a colour signal in dependence upon the colour selected by the colour selector switch, enabling illumination means of such a detector to adopt the same colour.

Examples of fish-bite indicating apparatus embodying the present invention will now be described in greater detail with reference to the accompanying drawings, in which:
- Figure 1: shows a perspective view of part of a first embodiment of fish-bite indicating apparatus embodying the present invention, in the form of a fish-bite detector, from the front, from above, and to one side;
- Figure 2: shows a perspective view of the detector shown in Figure 1 from the other side and slightly to the front thereof, with a cover therefor juxtaposed;
- Figure 2a: shows, on a larger scale, details of the inside of the cover shown in Figure 2;
- Figure 3: shows a part-sectional perspective view of the detector and cover combination shown in Figure 2, with the cover in an intermediate stage of engagement with the detector;
- Figure 4: shows details of parts of Figure 3 on a larger scale with the cover in a position closer still to its full engagement position with the detector;
- Figure 5: shows the same portions as shown in Figure 4 with the cover fully engaging the detector;
- Figure 6: shows diagrammatic block circuit diagrams of the circuitry of the detector shown in Figure 1;
- Figure 7: shows a perspective view of the rearside of the detector with the battery cover removed and screws thereof undone;
- Figure 8: shows details on a larger scale of the interior of the detector shown in Figure 1;
- Figure 9: shows a perspective view of the parts shown in Figure 8;
- Figure 10: shows a perspective view of the parts corresponding to those shown in Figures 8 and 9, in a modification thereof;
- Figure 11: shows a side elevational view of a second embodiment of fish-bite indicating apparatus embodying the present invention; and
- Figure 12: shows a block diagram of the electrical circuit of the apparatus shown in Figure 11.

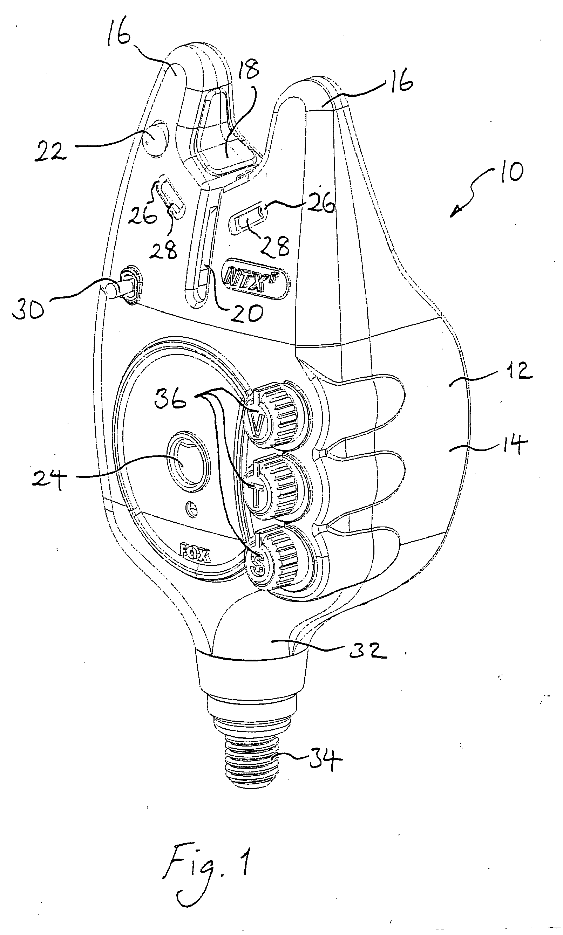

The fish-bite detector 10 shown in Figure 1 comprises a rigid plastics housing 12 having a bulbous lower rear portion for housing batteries and two spaced-apart upwardly extending ear portions 16 defining a crotch portion 18 in which can be seated a portion of a fishing rod (not shown) when the detector is in use. A slot 20 extends downwardly from the crotch portion 18 within which is arranged a wheel (not shown), the fishing line of the rod engaging this wheel when the detector is in use. Sensors (not shown) are provided to detect rotation of the wheel. The sensors (not shown) are connected to circuitry to trigger illumination of a multi-colour light emitting diode unit 22 and to emit an audible signal from a beeper 24, also positioned on a front face of the detector. The front of the detector is also provided with two slanting elongate beta light recesses 26 accommodating respective elongate beta lights 28.

The front face of the detector is also provided with an on/off toggle switch 30 which is so constructed that in its on position the toggle is substantially horizontal and in its off position the toggle is slanted upwardly. The lower end 32 of the detector tapers down to a screw threaded shank 34 for attaching the detector to a bankstick or other support.

Three generally circular rotary adjustment knobs 36 are provided on the front face of the detector 10 in a linear arrangement one above the other. The uppermost knob 36 controls the volume, the middle switch controls the tone and the lowermost switch controls the sensitivity of the illumination of the detector.

The detector 10 is provided with a rigid plastics hardcase cover 40 having the form of a shell sculptured to fit the front of the detector 10. At its upper end it is provided with an elongate cupped portion 42 dimensioned to hook over the ears 16 of the detector 10. The cover 40 has a first bulbous hollow protuberance 44 for accommodating the LED unit 22, a second bulbous hollow protuberance 46 for accommodating the toggle switch 30, and an elongate shaped hollow protuberance 48 for accommodating the three control knobs 36. The cover also tapers at its lower end 50 and is provided with a circlip 52 which snaps on to the generally circular tapered lower end 32 of the detector 10. Thus, to place the cover 40 protectively and securely on the detector 10, the elongate cup 42 is hooked over the ears 16 and the cover is pivoted about the ears 16 so that its lower end 50 approaches and engages the lower end 32 of the detector until the circlip 52 snap-fits therearound to hold the cover 40 firmly in place on the detector 10.

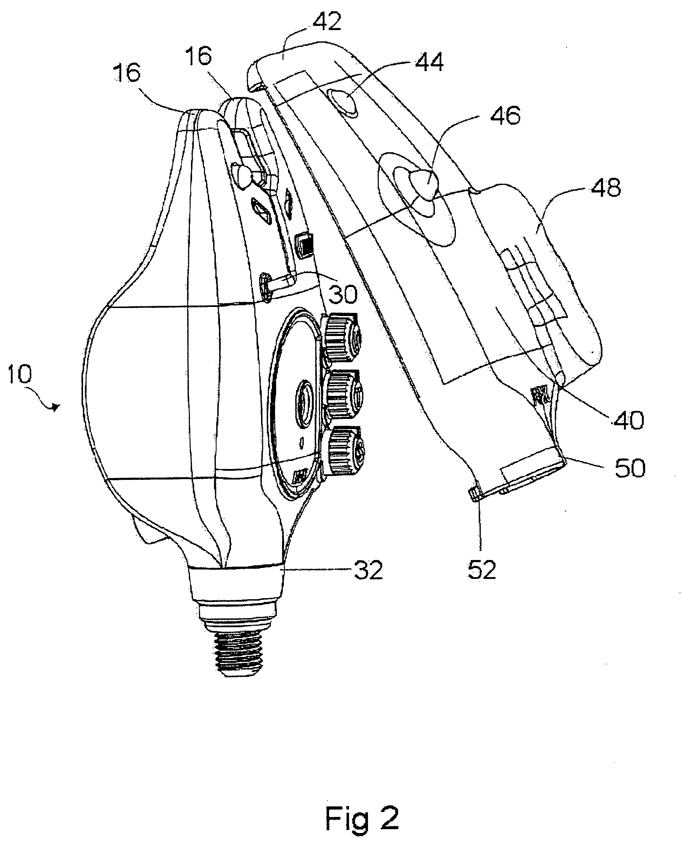

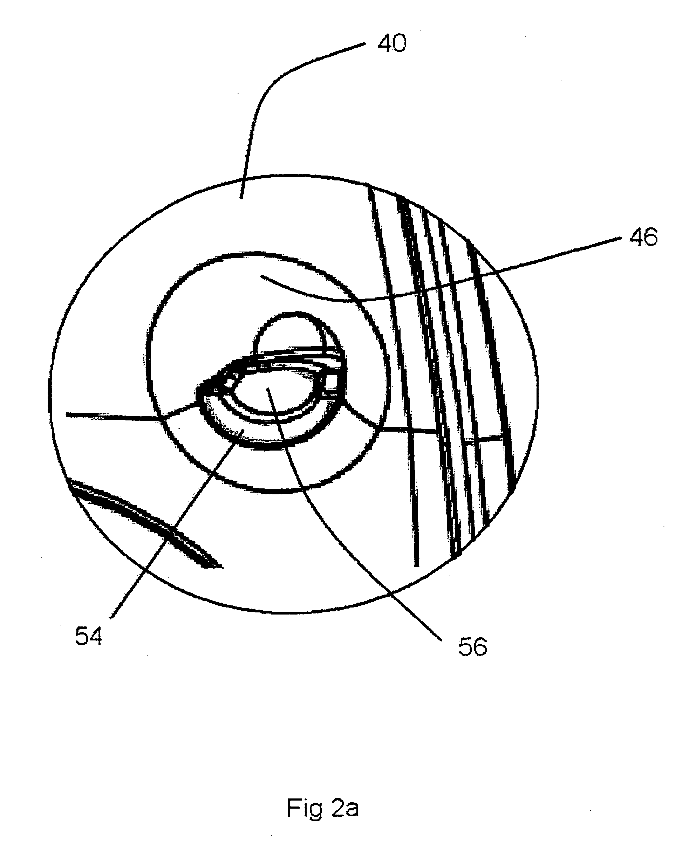

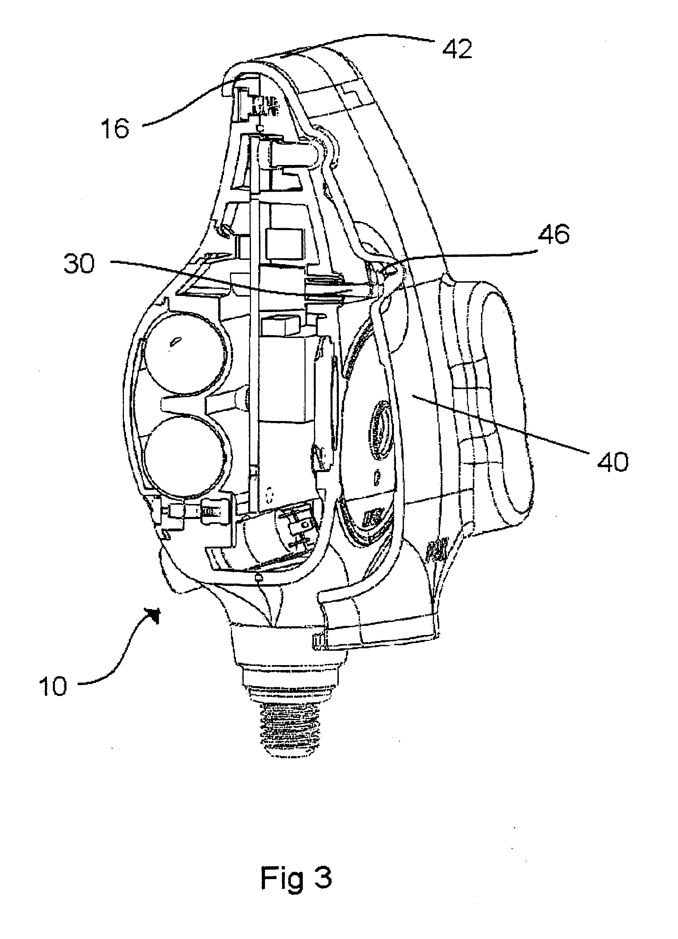

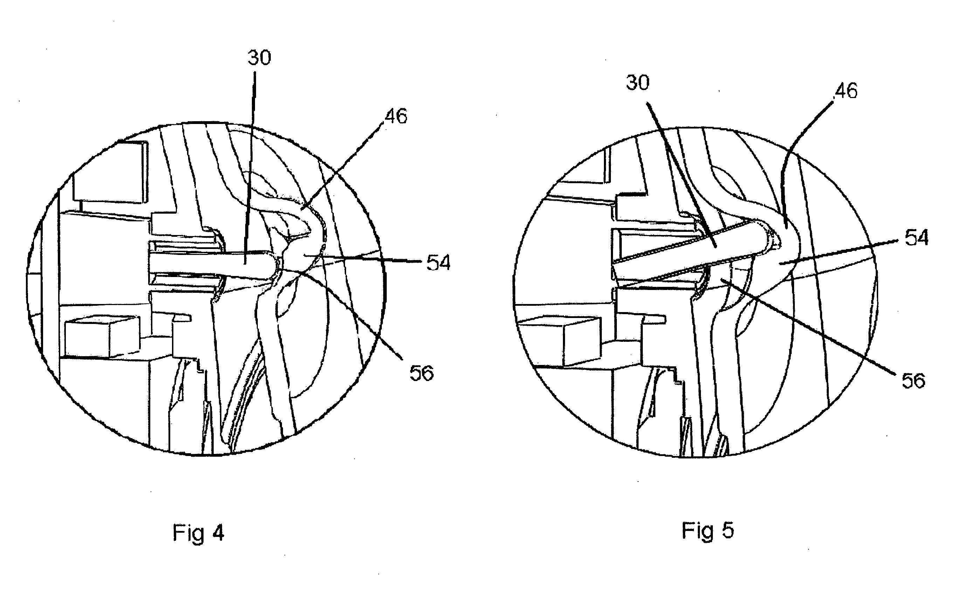

The interior of the hollow protuberance 46 which accommodates the toggle switch 30 is shown in greater detail in Figure 2a. Thus, it has a lower portion 54 filled in with solid plastics material. This is shaped to provide a slanting surface 56 which is concave so that it is curved as viewed from the rear of the cover 40, curved at an interior end as viewed from above the cover 40, and curved in a generally vertical cross-sectional plane. Some of these features can also be seen clearly in Figures 3 to 5.

As a result, as the hard cover 40 is positioned on to the detector 10 and pivoted about the ear 16 in the manner already described, the forward end of the toggle switch 30 rides up the slanting surface 56 which thereby acts as a ramp. The further the cover is pivoted on to the detector 10, the further upwards the toggle switch 30 is moved from its on position until finally, when the cover fully engages the detector 10, the toggle switch 30 is in its off position with its outer end accommodated in the unfilled interior of the bulbous protuberance 46. As a result, the cover 40 cannot be placed fully on to the detector 10 without ensuring that the detector 10 is switched off, if necessary by movement of the toggle switch 30 to its off position.

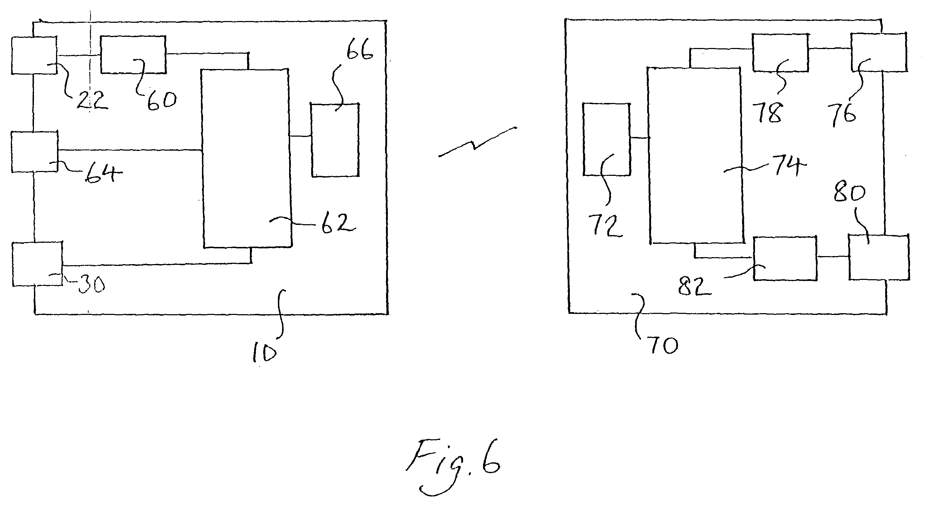

Figure 6 shows circuitry of the detector shown in Figure 1 located in the interior thereof. Those aspects of the circuitry which are not central to the present invention will not be described because they are well known in the art and are fully disclosed for example in EP-A-0570117 and in EP-A-1614348, the full contents of both of which are hereby imported into this present specification.

Thus, the detector 10 is provided with an LED driver 60 connected to drive the LED unit 22 and also connected to a central processing unit 62. Also connected to the latter is at least one colour selector dipswitch 64 of the detector 10, and a transmitter 66 of the detector 10. A remote unit 70 shown in Figure 6 is also provided. This has a receiver 72 connected to a central processing unit 74. The latter is connected to a multi-colour LED unit 76 provided on the remote unit 70 and connected to the central processing unit 74 via an LED driver 78. The central processing unit 74 is also connected to a beeper 80 via a beeper driver 82. As in EP-A-1614348, when the detector detects a fish-bite, the CPU 62 causes the LED unit 22 to flash and the beeper 24 to beep.

The central processing unit 62 is programmed such that successive operations of the dipswitch 64 cycles the colour of light emitted from the LED 22 through its different options, such as red, blue, green, yellow and back to red. As a result, when the CPU 62 causes the transmitter 66 to transmit a digital alarm signal (in the manner described in EP-A-1614348) indicative of the duration of the beep of the detector, the pitch of the beep, the identity of the detector issuing the signal, and a checksum to check the integrity of the signal, possibly also whether for forward or backward motion of the line, upon sensing of a fish-bite, it also causes a colour code indicative of the colour last selected by the dipswitch 64, to be incorporated in the alarm signal.

The radio signal picked up by the remote unit 70 by means of its receiver 72 is decoded by the CPU 74 which is also programmed to change the colour of light emitted by the multi-colour diode 76 to the same colour as is for the time being emitted by the LED unit 22 when the latter is operated.

As in EP-A-1614348, the alarm signal is issued between beeps, in such a manner that the link appears to be real-time, and the detector 10 and the remote unit 70 beep simultaneously.

The on/off switch 30 is connected to the CPU 62 to relay a change of state of the on/off switch 30 from the on position to the off position thereto. The CPU 62 as a result causes a switch-off signal to be issued by the transmitter 66 before it disables the detector and puts it into a sleep mode. The transmitted switch-off signal is picked up by the receiver 72 of the remote unit 70 and causes light to be emitted from the LED 76 and an audible alarm to be emitted by the beeper 80 by way of the CPU 74 and the respective drivers 78 and 82.

In this way, if the detector 10 is switched-off by a thief in his attempt to ensure that accidental triggering of a signal by motion of the detector 10 will not occur, this will be picked up immediately by the remote unit 70.

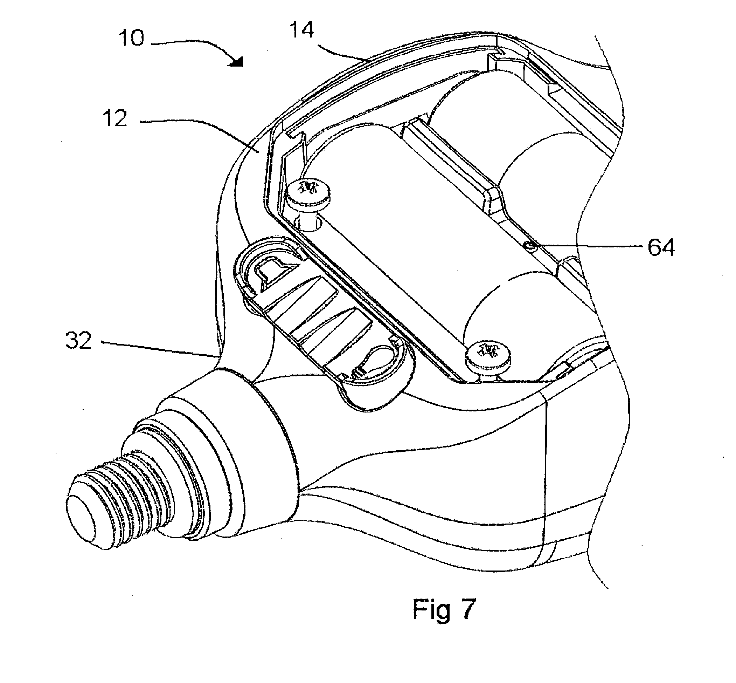

Figure 7 shows the location of the dipswitch 64 on a recess in the divider wall between two battery cavities normally underneath a battery cover of a detector (not shown). It may be operated by a biro or other pointed object by pushing it inwardly. Successive such pushes cycles the colour of the light emitting diode through its successive options; red, blue, green, yellow and back to red and so on.

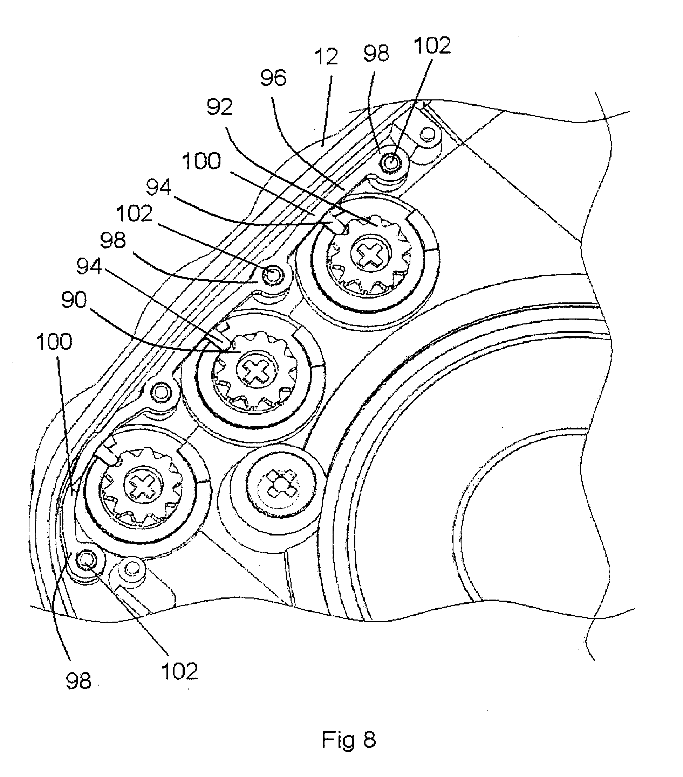

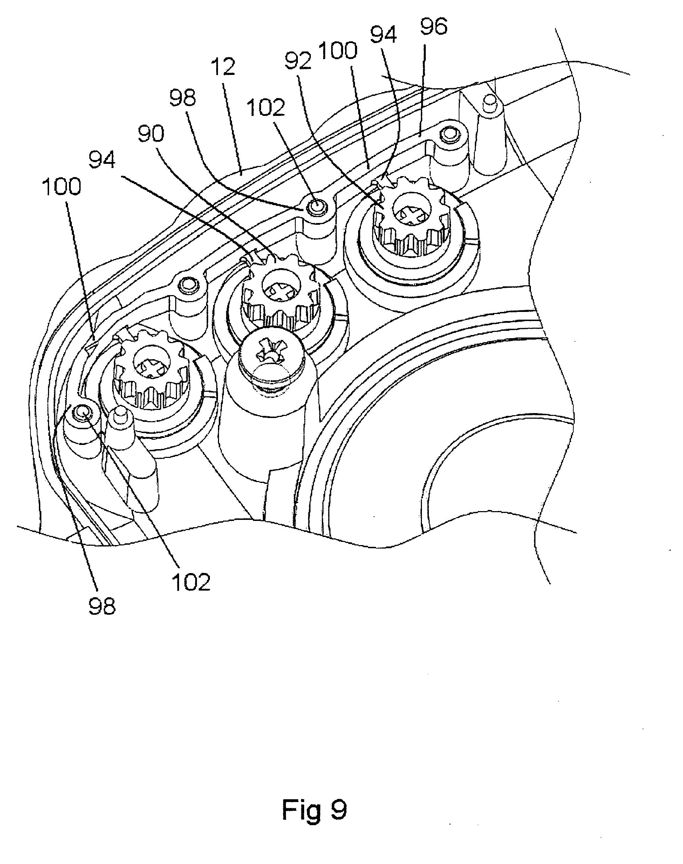

Figures 8 and 9 show the interior parts of the detector 10, more especially the reverse sides of the lower of the two control knobs 36, more especially for the tone and sensitivity of the bite alarm. Fixedly attached to the rear of these knobs so as to be rotatable therewith are respective toothed wheels 90 and 92. The volume knob 36 is also provided with such a toothed wheel (not shown).

Respective clicker portions 94 are provided for the toothed wheels 90 and 92, located between two teeth which are for the time being adjacent to the clicker portion, to define relative positions for the knobs 36. The clicker portions 94 are integral with one and the same elongate plastics part 96. The latter comprises a series of rings of plastics material 98 interconnected by elongate bridging portions 100 laterally from which extend the clicker portions 94 respectively. The rings 98 are threaded over spigots 102 fixedly attached to the detector housing 12.

As one of the control knobs 36 is rotated, its associated clicker portion 94 is able to rotate slightly and move outwardly from the associated toothed wheel 96 by flexing of the bridging portion 100 to which it is attached. Flexing of this bridging portion 100 is facilitated by relative rotation of the rings 98 at the opposite ends of the bridging portion 100 about their associated spigots 102.

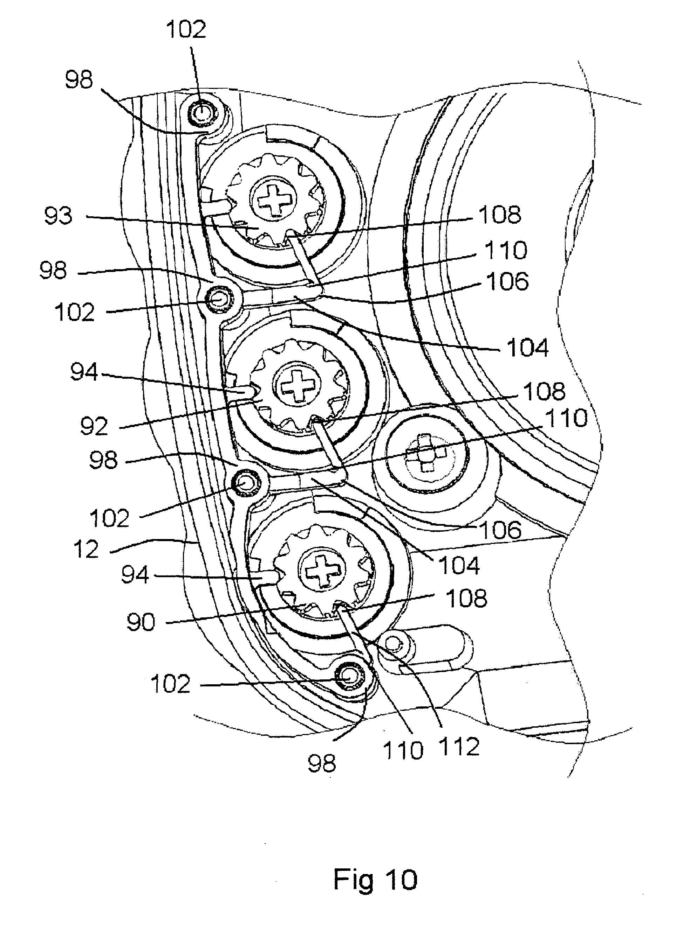

In the modification shown in Figure 10, there is a further clicker device for each toothed wheel 90, 92, 93 in the form of an arm 104 extending inwardly from an anchoring ring 98. Each arm 104 for the toothed wheels 92 and 93 tapers in depth in the direction away from its ring 98. At the end of the taper, the arm bends through an acute angle at a bend 106 into a portion of the arm having a distal end 108 located between the teeth of the associated toothed wheel 92 or 93. Each arm 104 is narrowed at a neck portion 110 adjacent to the bend. A further clicker arm 112 for the toothed wheel 90 extends from the anchoring ring 98 at the end of the part 96 without the tapering part and with the narrowed portion 110 adjacent to the anchoring ring 98.

As one of the toothed wheels 90, 92 or 93 is rotated, the resulting lifting of the associated clicker portion 94 urges the associated clicker arm 104 or 106 towards the wheel 92, improving the firmness with which the position of the wheel is held between clicks.

Numerous modifications and variations to the apparatus illustrated in Figures 1 to 10 may occur to the reader without taking the resulting construction outside the scope of the present invention. For example, a further device such as a pressure switch, contact switch, magnetic sensor on the crotch 18 of the detector 10 may be connected to trigger an alarm signal at the remote unit 70 in the event that the rod (not shown) is removed from the detector 10. Alternatively or in addition, there could be an infra-red detector-emitter pair with an infra-red beam crossing from one ear 16 of the detector to the other, or from one ear to a reflector on a rod, and back to the same ear. Alternatively or in addition, such a further device may be arranged on the lower end of the detector 10 to indicate if the latter is removed from whatever is supporting it. Alternatively or in addition, the detector may be provided with a trembler switch or an integrated circuit accelerometer to indicate movement of the detector. This can be connected to the CPU 62, the latter being programmed to issue a detector movement signal upon receipt of a signal from the trembler switch or the accelerometer, which when received by the remote unit causes the latter to issue an alarm signal.

Other ways of protecting the detector would be by requiring the entry of a PIN code to actuate it, which could be entered at the detector or better still at the remote unit if both the detector and the remote unit are provided with transceivers, or alternatively or additionally by way of a passive infra-red movement detector, or alternatively or additionally by way of an out-of-range detection if very short bursts of coded signals are transmitted from the detector to the remote unit at relatively short intervals, triggering an alarm in the remote unit 70 if the signals are absent thereat.

The dipswitch 64 may be provided instead in the remote unit 70, the receiver 72 then being a transmitter/receiver, transmitting data indicative of the colour selected by the dipswitch to the detector 10, the latter in this case being modified to effect a corresponding selection for the colour of its multi-colour light emitting diode unit 22.

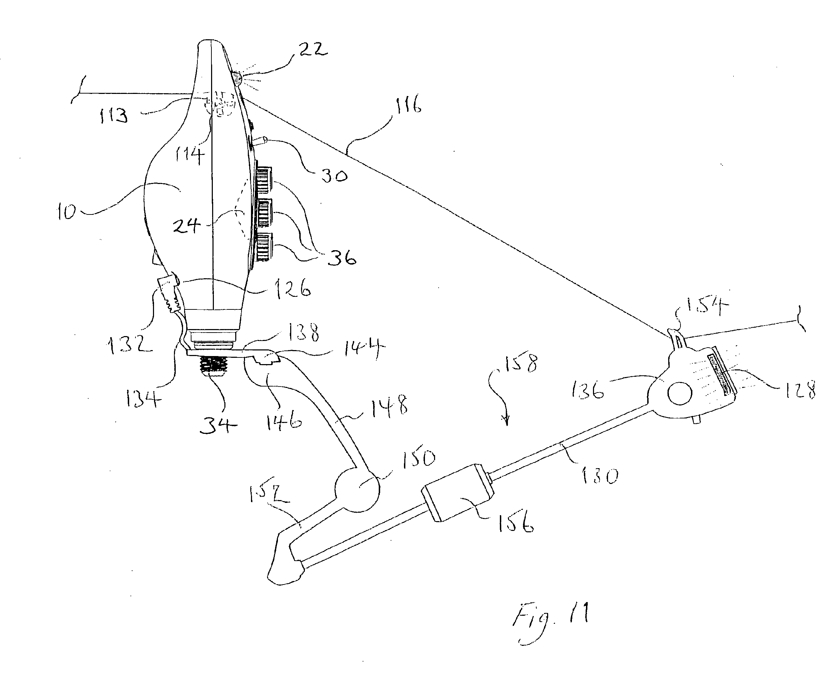

The bite indicating apparatus illustrated in Figure 11 comprises the fish-bite detector 10 already described with reference to Figures 1 to 10. The latter is provided with a rotatable wheel 113 to which a magnetic roller 114 is fixed to rotate therewith. A fishing line 116 of a fishing rod (not shown) passes over the rim of the wheel 113 so that the latter is rotated in one sense or in the opposite sense in accordance with the direction of any longitudinal movement of the line 116. Circuitry, to be described herein with reference to Figure 2, couples the roller 114 to the multicolour light-emitting diode unit 22 and the beeper 24.

As already mentioned, the electronic bite detector 10 is further provided with an on/off/test switch 30 and three adjustment switches 36 for adjustment of the volume and tone of the beeper 24, and the sensitivity of the detector 10, by altering the length of longitudinal movement of the line 116 required to trigger a flash of the diode 22 and/or a beep from the beeper 24.

In addition, the detector 10 has an output connector in the form of a socket 126 for electrical connection to and operation of a separate further illumination means, in this case a light emitting diode 128 at the end of an arm 130. The electrical connection is effected by means of a releasable plug 132 which fits in the socket 126. A cable 134 extends from the plug 132 to the arm 130, along and through which it extends to a head 136 at the distal end of the arm 130. The diode 128 is contained within the head 136.

The arm 130 is physically connected to the detector 10 by means of a ring mount 138 having a ring 140 which fits around an externally screw-threaded bank-stick connector 34 at the base of the detector 10, and one part 144 of a slidable dovetail joint. The other part 146 of this joint is at an upper end of a downwardly extending elongate pivot support 148, at the lower end of which is a pivot 150. A rearwardly extending portion 152 is pivotally attached to the support 148 by way of the pivot 150, and fixed to a rear end of the portion 152 is the arm 130 which extends on a slant upwardly from the portion 152 underneath and towards the line 116. The head 136, which is at the end of the arm 130 further from the portion 152, is provided with a releasable line engagement clip 154 as well as the diode 128.

A slidable weight 156 is attached to and is slidable along the arm 130 to adjust the tension on the line 116.

The support 148, pivot 150, portion 152, arm 130, head 136, clip 154, diode 128 and weight 156 constitute a further bite indicating device 158.

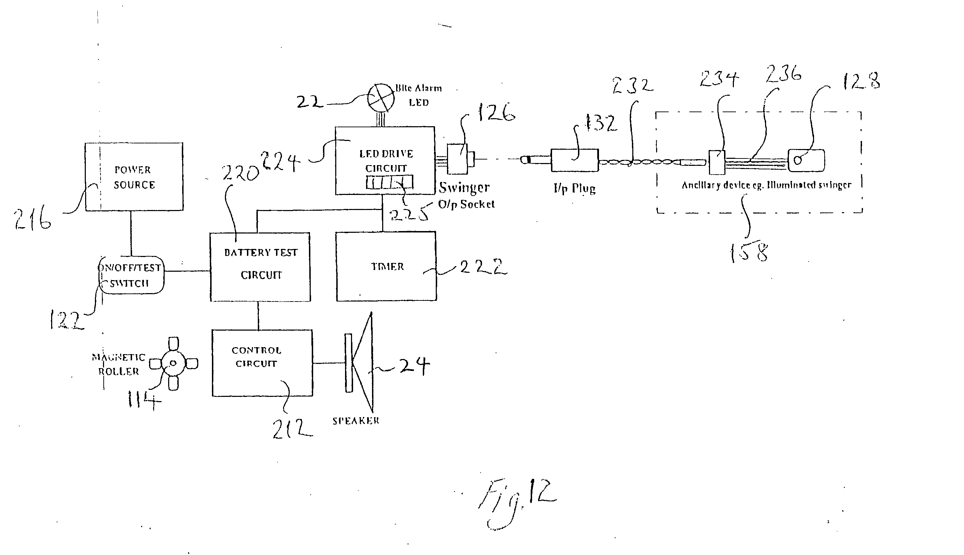

The electrical circuitry of the apparatus shown in Figure 11 is illustrated in Figure 12.

With reference to Figure 12, the magnetic roller 114 rotates in one or other sense in the event of forward or backward longitudinal movement of the line 116 respectively. Two reed relay switches (not shown) are provided in the manner described in EP-A-0850562. The beeper 24 is connected to a control circuit 212 to issue an audible signal in dependence upon movement of the roller 114, the power for such a signal being derived from a power source 216 connected to the control circuit 212 via the on/off/test switch 30 and a battery test circuit 220.

An output from the battery test circuit 220 is connected to a counter or timer 222 which is also connected to provide a control signal to a drive circuit 224. The latter is connected to drive the multicolour light emitting diode 22 and also to provide a drive signal to the output socket 126. Four wires connect the diode 118 to the drive circuit 224, and four wires also connect the socket 126 to the circuit 224. In each case, one of the wires is a cathode or part of a cathode shared by the red, green and blue light emitting parts of the diode 22 or 128, and the other three wires are respective anodes or parts of anodes for those parts of the diode 22 or 128 to enable the circuit to selectively illuminate one or more diode parts, and hence the colour of illumination, according to the selection made by dipswitches 225 of the circuit 224.

The drive circuit 224 latches to the on condition for a predetermined duration, preferably 20 seconds, upon receipt of a pulse from the control circuit 212 when the latter is triggered by movement of the roller 114, and hence of the fishing line 116. The corresponding plug 132, which is readily engageable and disengageable with the socket 128 to effect an electrical connection therethrough, is connected via the cable 134, an intermediate connector 234, and a four-wire line 236 to the light emitting diode 128 in the head 136 at the end of the pivotable arm 130 which swings up and/or down in dependence upon movement of the line 116.

As described in EP-A-0850562, a different signal from the drive circuit 224 is issued in dependence upon whether the line moves in a longitudinally forward or a longitudinally rearward direction. For the former it generates a continuous signal, for example for a period of 20 seconds, for the latter it generates a pulsed signal for the same duration.

It will therefore be seen that when this apparatus is in use, a corresponding continuous or pulsed illumination of the light emitting diode 128 on the arm 130 is obtained as well as at the light emitting diode 22, the colour of illumination of the diode 22 and the diode 128 being the same, notwithstanding the difficulty that would otherwise be encountered in generating such an illumination signal on the arm were it not so coupled electrically with the drive circuit 224 of the apparatus.

Numerous variations and modifications to the circuitry illustrated in Figures 11 and 12 may occur to the reader of ordinary skill in the art without taking the resulting construction outside the scope of the invention. For example, instead of having three anode wires from the circuit 224 to the diode 128, to effect selective operation of one of the colour parts of the multicolour diode 128, one wire could be used, and a coded signal from an encoder (not shown) provided in the circuit 224 transmitted along that wire, a decoder (not shown) being provided in the head 136 to effect illumination of the diode 128 with the selected colour. The coding/decoding may be similar to that described for radio signals in the apparatus illustrated in Figures 1 to 10. This reduces the number of wires required in the cable 134, or alternatively it frees two of the wires in the four-wire cable 134 for other functions.

Whilst the illustrated embodiment comprises a pivotable arm construction for the further bite indicating device, this could alternatively be in the form of a hanger, which has a flexible loose hanging elongate part between the mount 144 and the head 136 instead of the rigid parts 148, 152 and 130.

Various parts of the circuitry shown in Figure 12 would actually be incorporated in an appropriately programmed microprocessor chip.

## Claims

1. A fish-bite indicating device (10) having a fishing line movement sensor (114, 212) and an indicator signal generating circuit (62, 224) connected to the sensor (114, 212) to provide an indicator signal upon detection of line movement by the sensor (114, 212), the indicator signal generating circuit (62, 224) being provided with an output (66, 126) which communicates with a further bite indicating device (70, 158) when the first-mentioned bite indicating device (10) is in use, **characterised in that** the device (10) is provided with illumination means (22) connected to the indicator signal generating circuit (62, 224) and capable of adopting any selected one of a plurality of different colours with which it is illuminated in dependence upon a signal issued by the indicator signal generating circuit (62, 224), and in which that signal is also delivered to the said output (66, 126), so that when such a further bite indicating device (70, 158), also with illumination means (76, 128) capable of adopting any selected one of a plurality of different colours with which it is illuminated, is in communication with the first-mentioned bite indicating device (10), the illumination means (76, 128) of the further bite indicating device (70, 158) are illuminated with the same selected one of the said plurality of different colours as the illumination means (22) of the first-mentioned bite indicating device (10), the colour of the illumination means (76, 128) of the further bite indicating device (70, 158) being determined also by the said signal.

2. A fish-bite indicating device according to claim 1, **characterised in that** the said output comprises an output connector (126).

3. A fish-bite indicating device according to claim 2, **characterised in that** the output connector (126) is in addition to a further output connector with which the device is provided, this further output connector being so constructed as to enable a readily releasable electrical connection to be made with a power source of the apparatus.

4. A fish-bite indicating device according to claim 2, **characterised in that** the output connector (126) is constructed to provide a power source connection.

5. A fish-bite indicating device according to any preceding claim, **characterised in that** the indicator signal generating circuit (62, 224) is constructed to issue a first signal when the line movement is in one direction, and a second signal, different from the first signal, when it is in the opposite direction.

6. A fish-bite indicating device according to claim 5, **characterised in that** the first signal is continuous, and the second pulsed.

7. A fish-bite indicating device according to claim 1, **characterised in that** the said output comprises a digital transmitter (66) capable of transmitting a digitally encoded signal so that, when the device is in use, it can communicate with such a further bite indicating device (70, 158) having a receiver (72) capable of receiving and decoding the digitally encoded signal from the transmitter (66).

8. A fish-bite indicating device according to claim 7, **characterised in that** the transmitter (66) is constructed to issue a digital alarm signal when a fish bite is detected by the device (10), and the colour signal is incorporated into such an alarm signal.

9. A fish-bite indicating device according to claim 7 or claim 8, **characterised in that** the digitally encoded signal comprises a radio signal.

10. A fish-bite indicating device according to any of the claims 7 to 9, **characterised in that** the first-mentioned fish-bite indicating device (10) referred to in claim 1 is provided with a colour selector switch (64) connected to its illumination means (22) and electrical circuitry (62) connected between the colour selector switch (64) and the transmitter (66) so that the latter issues a colour signal in dependence upon the colour selected by the colour selector switch (64).

11. A fish-bite indicating device according to claim 10, **characterised in that** the colour selector switch (64) comprises a dipswitch.

12. A fish-bite indicating device according to claim 10 or claim 11, **characterised in that** the colour selector switch (64) is located on the first-mentioned fish-bite indicating device (10) referred to in claim 1.

13. A fish-bite indicating device according to claim 12, **characterised in that** the colour selector switch (64) is so located on that device (10) so that it is only accessible upon removal of a battery cover thereof.

14. Apparatus comprising both the first mentioned fish-bite indicating device (10) referred to in claim 1 and such a further fish-bite indicating device (70, 158).

15. Apparatus according to claim 14 read as appended to claim 7, **characterised in that** the said further fish-bite indicating device (70) is provided with illumination means (76) and electrical circuitry (74) connected between the receiver (72) and its illumination means (76) to change the colour of the light emitted therefrom to the colour, if changed, emitted by the illumination means (76) of the first mentioned fish-bite indicating device (10) which has the transmitter (66) upon receipt of the said colour output.

16. A receiver unit (70) having a receiver (72) capable of receiving and decoding the digitally encoded signal from the transmitter (66) of a device (10) as claimed in claim 7, the unit (70) being provided with illumination means (76) and electrical circuitry (74) connected between the receiver (72) and its illumination means (76) to change the colour of the light emitted therefrom to the colour, if changed, emitted by the illumination means (76) of the device (10) which has the transmitter (66) upon receipt of the said colour signal.

17. A fish-bite indicating device (158) comprising a line releasably engaging head (136) with illumination means (128) capable of emitting light of any selected one of a plurality of different colours, and an electrical connector (132) connectable to the output (126) of a fish-bite indicating device (10) as claimed in claim 1 and connected to the illumination means (128) of the head (136) to ensure that the colour of light emitted thereby is the same as that emitted by the illumination means (22) of the device (10) as claimed in claim 1.

18. A fish-bite indicating device according to claim 17, **characterised in that** the device comprises a pivotal arm (130) mounted on a pivot (150) at one end and provided with the line releasably-engaging head (136) at the other end.

19. A unit (70) provided with a transmitter/receiver (74) capable of transmitting and receiving digitally encoded signals, illumination means (76) capable of adopting any selected one of a plurality of different colours with which it is illuminated, and electrical circuitry (74) connected between the transmitter/receiver (72) and the illumination means (76) to cause light to be emitted therefrom in dependence upon a signal transmitted by a fish-bite detector (10) when the unit is in use, the unit (70) having a colour selector switch connected to its illumination means (76) and electrical circuitry connected between the colour selector switch and the transmitter/receiver (72) so that the latter issues a colour signal in dependence upon the colour selected by the colour selector switch, enabling illumination means (22) of such a detector (10) to adopt the same colour.
